# EUROPÄISCHE PATENTSCHRIFT

(11) **EP 3 398 886 B1**
(45) Veröffentlichungstag und Bekanntmachung des Hinweises auf die Patenterteilung: **07.08.2024**
(21) Anmeldenummer: 17210416.8
(22) Anmeldetag: 22.12.2017
(51) Int. Cl.: B65G 47/32, B65G 33/04, B65G 47/84, B65G 47/08

(54) **OBJEKTTRANSPORTVORRICHTUNG**
OBJECT TRANSPORTATION DEVICE
DISPOSITIF DE TRANSPORT D'OBJETS

(30) Priorität: 02.05.2017 DE 102017004232
(43) Veröffentlichungstag der Anmeldung: 07.11.2018
(73) Patentinhaber: Körber Pharma Inspection GmbH, 85570 Markt Schwaben (DE)
(72) Erfinder: Baumgartner, Hans, 83324 Ruhpolding (DE); Bauer, Zeno, 84424 Isen (DE); Huber, Bernhard, 85669 Pastetten (DE); Möstl, Johann, 85599 Parsdorf (DE)
(74) Vertreter: Laufhütte, Dieter

(56) Entgegenhaltungen:
- EP-A1- 0 127 584
- EP-A2- 0 656 305
- WO-A1-2007/115085
- CN-U- 205 838 544
- US-A- 2 461 277
- US-A1- 2010 258 404

## Beschreibung

Die vorliegende Erfindung betrifft eine Objekttransportvorrichtung zur Übergabe von Gegenständen von einer Zuführeinrichtung an eine Abnahmeeinrichtung.

Insbesondere bei der Verarbeitung von pharmazeutischen Containern wie Spritzen, Ampullen, Zylinderampullen, Fläschchen oder Vials ist es oftmals erforderlich aus einem linearen kontinuierlichen Objekttransport in einen getakteten Transport oder umgekehrt überzugehen. So werden beispielsweise zu inspizierende pharmazeutische Container getaktet aus einem Containernest entnommen und in einen kontinuierlichen Förderweg übergeführt. Hierzu gibt es Objekttransportvorrichtungen, die einen solchen Übergang von einem getakteten Transport zu einem linearen Transport möglichst rasch und effizient durchführen sollen.

In diesem Zusammenhang ist es problematisch, dass aufgrund erhöhter Anforderungen in der Herstellsicherheit eine Kontaktierung der pharmazeutischen Container bzw. der zu transportierenden Gegenstände untereinander nicht gewünscht ist. Man spricht hier von einem Transport ohne Glaskontakt, da die pharmazeutischen Behälter typischerweise aus Glas bestehen und sich gegenseitig nicht berühren. Stoßen die linear geförderten Gegenstände aneinander können sich unter Umständen Risse oder andere Beschädigungen in der Außenhaut der aneinander stoßenden Gegenstände bilden. Von daher ist es wünschenswert einen physischen Kontakt der zu fördernden Gegenstände zu vermeiden, um Beschädigungen beim Transport dieser Gegenstände zu verhindern.

Werden mängelbehaftete Gegenstände aussortiert, sollte die dadurch entstehende Lücke durch Aufschieben der nachfolgende Gegenstände geschlossen werden. Das Beibehalten der Lücke in dem Förderweg mindert jedoch die Gesamtförderkapazität und ist beim Renesten, also dem Einfügen der zu transportierenden Gegenstände in einen dafür vorgesehenen Aufbewahrungsbehälter (das sogenannte Nest), hinderlich. Oftmals werden hier nämlich Roboterarme verwendet, die dazu ausgelegt sind, mit einer Bewegung mehrere in einer Reihe aufeinanderfolgende Gegenstände aus dem Förderwerg zu heben und in einen dafür vorgesehenen Bereich des Nests zu überführen. Befindet sich in dem linearen Förderwerg nun eine Leerstelle, wird diese bei Ausbleiben entsprechender Gegenmaßnahmen auch in dem Nest vorhanden sein und muss unter Umständen manuell befüllt werden.

Umgekehrt kann es auch gewünscht sein, bei einem Denester Leerstellen gezielt zu erzeugen. Hierdurch kann bei einer nachgelagerten Inspektionsmaschine in einer zuvor gezielt erzeugten Leerstelle ein Gegenstand, beispielsweise Container, der nochmals inspeziert werden soll, eingesetzt werden.

Aus der WO 2007/115085 A1 ist eine Objekttransportvorrichtung zur Übergabe von Gegenständen von einer Zuführeinrichtung an eine Abnahmeeinrichtung bekannt, umfassend zwei in ihrer Breitenrichtung übereinander angeordnete Transportketten, die jeweils über einen separaten Antrieb verfügen, mehrere Aufnahmeelemente, von denen mindestens eines an jedem der Transportketten angeordnet ist und die dazu dienen, die zu transportierenden Gegenstände aufzunehmen, und ein Schneckenelement, das dazu ausgelegt ist, mit den mehreren Aufnahmeelementen zusammenzuwirken, um in einem Übergabebereich einen zu transportierenden Gegenstand aus einem der mehreren Aufnahmeelemente zu übernehmen, wobei das Schneckenelement einen Abschnitt mit einem gleichbleibenden Durchmesser aufweist.

Es ist die Aufgabe der vorliegenden Erfindung die oben aufgeführten Nachteile zu überwinden und eine besonders effiziente Objekttransportvorrichtung vorzusehen. Dies gelingt mit der Objekttransportvorrichtung, welche sämtliche Merkmale nach dem Anspruch 1 aufweist.

Die Augabe wird gelöst durch die Kombination der Merkmale des Anspruchs 1.

Demnach umfasst die Objekttransportvorrichtung zur Übergabe von Gegenständen von einer Zuführeinrichtung an eine Abnahmeeinrichtung mindestens zwei, vorzugsweise drei in ihrer Breitenrichtung übereinander angeordnete Transportriemen, die jeweils über einen separaten Antrieb verfügen, mehrere Aufnahmeelemente, von denen mindestens eines an jedem der Transportriemen angeordnet ist und die dazu dienen, die zu transportierenden Gegenstände aufzunehmen, und ein Schneckenelement, das dazu ausgelegt ist, mit den mehreren Aufnahmeelementen zusammenzuwirken, um in einem Übergabebereich einen zu transportierenden Gegenstand an eines der mehreren Aufnahmeelemente zu übergeben oder aus einem der mehreren Aufnahmeelemente zu übernehmen, wobei das Schneckenelement einen ersten Abschnitt mit einem gleichbleibenden Durchmesser und einen zweiten Abschnitt mit einem dazu größeren Durchmesser aufweist, an dem das Schneckenelement mit den mehreren Aufnahmeelementen zusammenwirkt.

Durch das Vorsehen der separaten Antriebe für die mehreren in ihrer Breitenrichtung versetzten Transportriemen, die parallel verlaufen können, ist es möglich, dass jeder der Transportriemen unabhängig von den anderen Transportriemen bewegt werden kann. Demnach kann vorgesehen sein, dass jeder der Transportriemen ein eigenes Bewegungsprofil aufweist, das mit einen entsprechenden Phasenversatz zu den anderen Bewegungsprofilen der weiteren Transportriemen abläuft.

Mit einer solchen Objekttransportvorrichtung können unabhängige Bewegungsprofile an zwei verschiedenen Übergabepunkten realisiert werden. So kann an einer Übergabestelle von einem verlangsamten oder getakteten Förderstrom auf einen beschleunigten oder kontinuierlichen Förderstrom und an einer anderen Übergabestelle von kontinuierlich auf getaktet übergegangen werden. Es können demnach Gegenstände zum Beispiel im verlangsamten Zustand oder im Stillstand an einer der Übergabestellen entnommen werden und an der anderen Übergabestelle linear an die Aufnahmeelemente der Transportriemen übergegeben werden. Zudem wäre denkbar, dass von einer diskontinuierlichen Produktteilung (beispielsweise in oder aus einem Nest) auf eine kontinuierliche Bewegung mit fixem Produktabstand entsprechend der Teilung der Objekttransportvorrichtung übergegangen werden kann.

Die Bewegungsabläufe an den Übergabestellen sind unabhängig voneinander, sodass bei einem kurzzeitigen Stopp an der einen Übergabe nicht zwangsläufig die andere Bewegung an der anderen Übergabe auch sofort stehenbleiben und gleichzeitig stoppen muss. Der eine Bewegungszyklus, der durch das Verschieben des einen Transportriemens erzeugt wird, kann somit noch abgeschlossen werden und muss nicht gleichzeitig mit dem Stoppen an einer anderen Übergabestelle abgebrochen werden.

Nach der Erfindung weist der mit den mehreren Aufnahmeelementen zusammenwirkende zweite Abschnitt des Schneckenelements ausgehend vom Durchmesser des ersten Abschnitts hin zum Übergabebereich einen kontinuierlich größer werdenden Durchmesser auf, und ist vorzugsweise im Bereich seines maximalen Durchmessers dazu ausgelegt, mit den mehreren Aufnahmeelementen zusammenzuwirken.

Im Wesentlichen weist das Schneckenelement also einen Bereich eines konstanten Durchmessers auf, der dann in einen zweiten Bereich übergeht, der einen größeren ausgeweiteten Schneckendurchmesser besitzt. Demnach besitzt das Schneckenelement eine Trompetenform, da sich das Schneckenelement hin zur seinem aufgeweiteten Ende im Durchmesser kontinuierlich vergrößert.

Der sich hieraus ergebende Vorteil ergibt sich dadurch, dass noch schnellere Bewegungsprofile mit den mehreren Transportriemen möglich sind. Der im Übergabebereich größere, aufgeweitete Schneckendurchmesser verjüngt sich hin zu einem kleineren Schneckendurchmesser, wodurch ein von dem Riemen an das Schneckenelement übergebener Gegenstand auf sehr kurzem Weg weg von dem Transportriemen geführt wird. Dies hat den Vorteil, dass durch das schnelle Wegführen der Gegenstände die Transportriemen bzw. die an den Transportriemen verbundenen Aufnahmeelemente nach kurzer Zeit wieder frei weiterbewegt werden können, da die Produkte nicht mehr im Eingriff und somit nicht mehr verzahnt sind.. Durch die Trompetenform des Schneckenelements wird der synchron laufende Bereich bei der Übergabe, an dem die Gegenstände mit den Aufnahmeelementen der Objekttransportvorrichtung als auch mit dem Schneckenelement in Verbindung stehen, deutlich verkürzt.

Dies bietet einen größeren Gestaltungsspielraum für die unterschiedlichen Bewegungsprofile bzw. Fahrprofile beim Objekttransport selbst. Mit einer so modifizierten Vorrichtung ist es möglich, höhere Produktionsgeschwindigkeiten und höhere Taktzahlen, d.h. einen höheren Durchsatz und eine bessere Maschinenleistung zu erreichen. Des weiteren baut die Maschine so wesentlich kleiner, so dass bei ihrem Aufstellen weniger Platz notwendig ist.

Nach der Erfindung ist es vorgesehen, dass der erste Abschnitt und der zweite Abschnitt des Schneckenelements voneinander getrennt sind und über einen jeweils separaten Antrieb verfügen. Mit Hilfe des separaten Antriebs ist es nun möglich, den ersten Abschnitt und den zweiten Abschnitt des Schneckenelements voneinander unabhängig rotieren zu lassen.

So kann nun beispielsweise der Vorteil erreicht werden, dass bei einer Objekttransportvorrichtung, deren Gegenstände untereinander berührungslos gefördert werden, Leerstellen zwischen dem zu fördernden Gegenständen geschlossen oder gezielt erzeugt werden können. Es ist für viele Anwendungen von Vorteil, wenn die zu transportierenden Gegenstände sich gegenseitig nicht berühren (sog. "no glass to glass contact"). Wird nun beispielsweise das Schneckenelement dazu verwendet, einen zu transportierenden Gegenstand an ein Aufnahmeelement zu übergeben und befindet sich in der Zuführung des Schneckenelements eine Leerstelle, die beispielsweise in einer Inspektionsvorrichtung durch Aussortieren des entsprechenden Gegenstands geschaffen worden ist, kann diese Leerstelle geschlossen werden, indem ein Schneckenelement gestoppt wird. Demnach ist es mit der vorliegenden Vorrichtung möglich, einen berührungslosen, produktschonenden Objekttransport mit einer Leerstellenkompensation durchzuführen.

Nach einer weiteren optionalen Fortbildung der Erfindung rotiert das Schneckenelement um eine Achse, die senkrecht zur Breitenrichtung der mindestens zwei Transportriemen ist. Zudem kann vorgesehen sein, dass die Rotationsachse parallel zu einer durch den Transportriemen zurückgelegten Längsbewegung ist. Bevorzugt rotiert das Schneckenelement um eine Achse, die parallel zur Längsrichtung des Transportriemens an der mit dem Schneckenelement gebildeten Übergabestelle ist.

Vorzugsweise ist vorgesehen, dass die mehreren Aufnahmeelemente jeweils so an den Transportriemen angeordnet sind, dass sie die zu transportierenden Gegenstände in einer gemeinsamen Ebene befördern. Demnach unterscheiden sich die Aufnahmeelemente in Abhängigkeit davon, an welchem der übereinander angeordneten Transportriemen sie befestigt sind.

Nach einer weiteren optionalen Fortbildung der Erfindung sind an jedem der Transportriemen mehrere Aufnahmeelemente in einer Gruppe angeordnet, vorzugsweise derart, dass die mehreren Aufnahmeelemente einer Gruppe in einer Längsrichtung des Transportriemens aneinander angrenzen oder zueinander benachbart sind, um ein Shuttle für mehrere zu transportierende Gegenstände zu bilden. Diese Gruppierung von Aufnahmeelementen, also das Shuttle, erlaubt eine getaktete Entnahme bzw. Aufnahme von zu transportierenden Gegenständen. Hält man beispielsweise ein mit Gegenständen versehenes Shuttle an, kann ein automatischer Greifer die Gegenstände problemlos abnehmen und einem Nest zuführen. In umgekehrter Richtung, also das Zuführen der Gegenstände in die Aufnahmen ist ebenfalls möglich.

Dabei kann vorgesehen sein, dass jeder der Transportriemen über eine lösbare Verbindung mit dem mindestens einen Aufnahmeelement verbunden ist, wobei vorzugsweise der Transportriemen dazu ein aus seiner Riemenfläche abstehendes Befestigungselement aufweist, das durch eine Schwalbenschwanzverbindung oder eine andere Verbindung mit einem Aufnahmeelement durch Aufstecken oder Aufschnappen in Verbindung bringbar ist. Bspw. bietet sich hier ein T-Clip an, der senkrecht von der flächigen Seite eines Transportriemens absteht.

Durch das Anbringen der Aufnahmeelemente an die Befestigungselemente des Transportriemens wird sichergestellt, dass auch in ihrem Format verschiedene Gegenstände mit der Objektvorrichtung transportierbar sind. Hierzu ist es dann nur erforderlich die auf das Objekt abgestimmten Aufnahmeelemente mit dem Befestigungselement des zugehörigen Transportriemens oder der zugehörigen Transportriemen zu verbinden bzw. je nach Format der zu transportierenden Gegenstände zu wechseln.

Ferner kann dabei vorgesehen sein, dass aus der Riemenfläche abstehende Befestigungselemente zum Eingehen der lösbaren Verbindung vorhanden sind, die mit einer bestimmten, festen Teilung zueinander an einem entsprechenden Transportriemen angeordnet sind, und die mit dem Befestigungselementen in Verbindung bringbaren Aufnahmeelemente zum Bilden eines Shuttles für mehrere zu transportierende Gegenstände entsprechend der bestimmten, festen Teilung der Anordnung der Befestigungselemente unterteilt sind.

In anderen Worten ist die Gruppierung der mehreren Aufnahmeelemente, die ein Shuttle für die zu transportierenden Gegenstände bildet, mit der gleichen Teilung unterteilt wie die Befestigungselemente an der Riemenfläche angeordnet sind. Die Auftrennung des Shuttles erfolgt dabei ohne Berücksichtigung der Teilung der zu transportierenden Gegenstände.

Ferner kann hierbei vorgesehen sein, dass das aus mehreren Aufnahmeelementen gebildete Shuttle ohne Rücksicht auf die tatsächliche Teilung der zu fördernden Gegenstände getrennt ist, sodass vorzugsweise hierdurch unabhängig von der Größe und dem Format der zu transportierenden Gegenstände die Mitte des Shuttles immer exakt an derselben Position des Transportriemens liegt. Dies gilt auch dann, wenn unterschiedlich dimensionierte Shuttle an dem Transportriemen angeordnet werden. Die Auftrennung in mehrere Teilstücke des Shuttles ist auch erforderlich, um bei einem Umlenken des Riemens die auf das Shuttle wirkenden Kräfte zu minimieren. Des weiteren kann der Radius der Transportbandscheiben verringert werden, so dass das Transportband weniger Platz benötigt.

Nach einer weiteren optionalen Fortbildung der Erfindung sind die mehreren Transportriemen bis auf ihre in Breitenrichtung der Transportriemen versetzte Anordnung im Wesentlichen gleich geführt und legen den gleichen Weg zurück.

Vorzugsweise kann vorgesehen sein, dass die Vorrichtung ferner eine Riemenantriebssteuereinheit umfasst, die dazu ausgelegt ist, jeden der mehreren separaten Antriebe der Transportriemen voneinander unabhängig anzusteuern, sodass die Transportriemen in unterschiedlicher und nicht konstanter Geschwindigkeit antreibbar sind. Mithilfe der Riemenantriebssteuereinheit kann demnach also jeder der mehreren Transportriemen unabhängig von einem anderen Transportriemen bewegt werden.

Nach einer weiteren optionalen Modifikation der Erfindung umfasst die Vorrichtung ferner eine Schneckenelementantriebssteuereinheit, die dazu ausgelegt ist, jeden der separaten Antriebe der mehreren Abschnitte des Schneckenelements voneinander unabhängig anzusteuern, um freie Leerstellen in einem Produktfluss von zu transportierenden Gegenständen zu schließen und zu erzeugen.

Nach einer weiteren Modifikation der Erfindung sind mehrere Übergangsbereiche zum Zuführen bzw. Abnehmen der zu transportierenden Gegenstände vorhanden, von denen an einem Übergangsbereich mehrere Gegenstände verlangsamt oder getaktet zu- oder abführbar sind und an einem anderen Übergangsbereich die Gegenstände einzeln linear beschleunigt oder kontinuierlich zu- oder abführbar sind.

Nach einer Fortbildung der Erfindung sind die zu transportierenden Gegenstände pharmazeutische Container, beispielsweise Spritzen, Ampullen, Zylinderampullen, Fläschchen und/oder Vials.

Weitere Merkmale, Einzelheiten und Vorteile der Erfindung werden anhand der nachfolgenden Figurenbeschreibung ersichtlich. Dabei zeigen:
- Fig. 1:: eine Perspektivansicht einer erfindungsgemäßen Objekttransportvorrichtung,
- Fig. 2:: eine Draufsicht der erfindungsgemäßen Objekttransportvorrichtung;
- Fig. 3:: eine weitere Perspektivansicht der erfindungsgemäßen Objekttransportvorrichtung;
- Fig. 4:: eine Rückansicht der erfindungsgemäßen Objekttransportvorrichtung,
- Fig. 5:: eine Draufsicht in einem Übergabebereich der Objekttransportvorrichtung mit einem Schneckenelement,
- Fig. 6:: eine Draufsicht in einem Übergabebereich der Objekttransportvorrichtung ohne dargestellte Führungsleisten, und
- Fig. 7:: eine Darstellung mehrerer Shuttle für unterschiedliche Formate von Aufnahmeelementen und die Auftrennung der Shuttle.

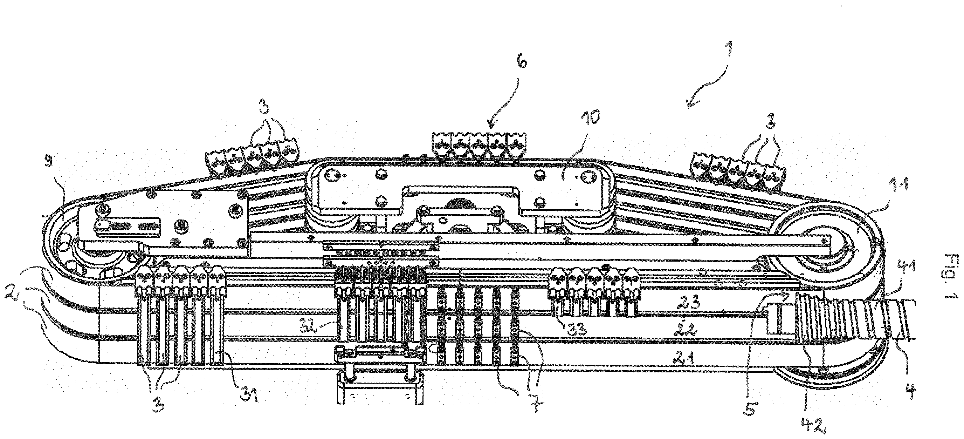

Fig. 1 zeigt eine Perspektivdarstellung der erfindungsgemäßen Objekttransportvorrichtung 1. Man erkennt die drei in ihrer Breitenrichtung übereinander angeordneten Transportriemen 2, die in der Figur aus einem unteren Transportriemen 21, einem mittleren Transportriemen 22 und einem oberen Transportriemen 23 bestehen. Jeder der Transportriemen 2 verläuft dabei um eine Riemenschiebe 11 und eine Riemenumlenkung 9, wobei jeder der Transportriemen 2 dabei mit einer eigenen Riemenscheibe 11 bzw. Riemenumlenkung 9 zusammenwirkt. Die Riemenscheibe 11 eines jeden Transportriemens 2 ist dabei mit einem eigenen Antrieb versehen, sodass die mehreren Transportriemen 2 unabhängig voneinander bewegt werden können. Die Transportriemen 2 sind dabei im Wesentlichen parallel zueinander geführt, sodass sie bis auf ihren Versatz in ihrer Breitenrichtung identisch verlaufen. Von der Erfindung ist jedoch ebenfalls umfasst, dass eine oder mehrere der Transportriemen 2 einen anderen Verlauf aufweisen als anderer Transportriemen 2.

Zum Spannen der Transportriemen 2, die um die Riemenscheibe 11 und um die Riemenumlenkung 9 geführt sind, ist ein bewegbarer Riemenspanner 10 vorgesehen, der die Innenseiten der Transportriemen 2 nach außen wegdrückt und einen Riemen 2 mit ausreichend Druck an der Riemenscheibe 11 und der Riemenumlenkung 9 befestigt. Dadurch ist es möglich, die Transportriemen 2 durch ein Bewegen des Riemenspanners 10 auf einfache Art und Weise zu spannen und bei einem eventuell notwendigen Tausch der Riemen 2 diese einfach in einen ungespannten Zustand zu überführen.

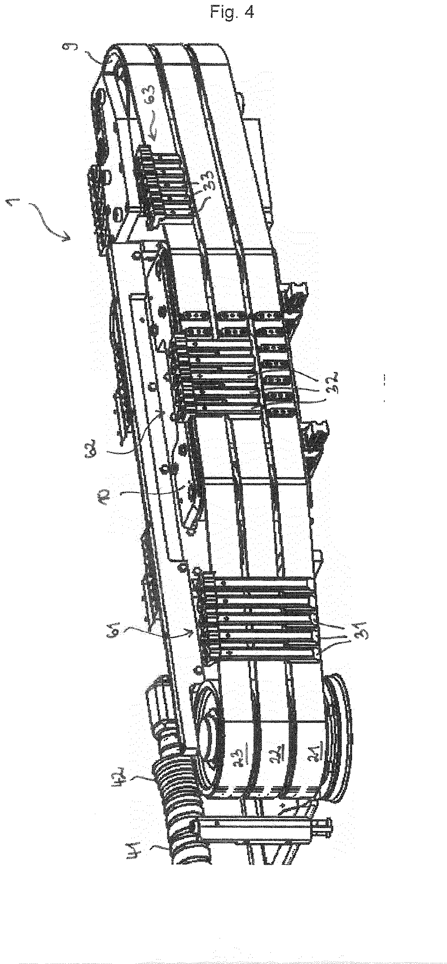

Jeder der Transportriemen 2 ist mit Befestigungselementen 7 versehen, die aus illustratorischen Zwecken auf der dem Betrachter der Fig. 1 zugewandten Seite der Transportriemen 2 übereinander an jedem der Transportriemen 2 dargestellt sind. Diese Befestigungselemente 7, die beispielsweise als T-Clip ausgeführt sein können, dienen zum Befestigen von Aufnahmeelementen 3 an einem entsprechenden Transportriemen 21, 22, 23. Die mit den Befestigungselementen 7 zusammenwirkenden Aufnahmeelemente 3 unterscheiden sich je nach Transportriemen 21, 22, 23, an dem sie angebracht werden, sodass es insgesamt für jeden Transportriemen eigens ausgestaltete Aufnahmeelemente 31, 32, 33 (siehe Fig. 4) gibt. Durch die verschiedenen auf die Position der Transportriemen angepassten Ausgestaltungen der Aufnahmeelemente 3 ist es möglich, die zu transportierenden Gegenstände unabhängig von dem sie befördernden Transportriemen 21, 22, 23 in einer gemeinsamen Ebene zu befördern. So werden die Aufnahmeelemente 3 bzw. die mit den Aufnahmeelementen 3 zu transportierenden Gegenstände zumindest in einem Übergangsbereich 5 immer in demselben Bereich durchgeführt. Das Schneckenelement kann also mit jedem der unterschiedlichen Ausgestaltungen 31, 32, 33 der Aufnahmeelemente zusammenwirken ohne eine Positionsveränderung ausführen zu müssen.

Die Aufnahmeelemente 3 sind dabei gruppiert an einem zugehörigen Transportriemen 2 angeordnet, sodass mehrerer Aufnahmeelemente 3 ein Shuttle 6 zum Transportieren mehrerer Gegenstände bilden. Ein Shuttle 6 besteht dabei aus mehreren aneinandergereihten Aufnahmeelementen 3, die vorzugsweise jeweils aneinander angrenzen.

Ferner erkennt man einen Übergangsbereich 5, an den die zu transportierenden Gegenstände (nicht dargestellt) in die Aufnahmeelemente 3 überführt oder aus den Aufnahmeelementen 3 herausgeführt werden können. Dazu ist in dem Übergangsbereich 5 ein Schneckenelemente 4 vorgesehen, das an seinen den Übergangsbereich 5 zugewandten Ende einen zweiten Abschnitt 42 aufweist, der im Vergleich zu den von den Übergangsbereich 5 abgewandten ersten Abschnitt 42 einen sich stetig vergrößernden Durchmesserabschnitt aufweist. Der erste Abschnitt, der sich an den zweiten Abschnitt anschließt, ist hingegen in seinem Durchmesser konstant. Dadurch ist es möglich, die zu transportierenden Gegenstände besonders schnell und effektiv aus einem mit den jeweiligen Aufnahmeelementen 3 kämmenden Übergangsbereich 5 herauszuführen, sodass die Transportriemen 2 ohne lange Verzögerung aufgrund des Synchronlaufs mit dem Schneckenelement 4 wieder eine erhöhte Bewegungsgeschwindigkeit aufnehmen können. Der Einfachheit halber kann jeder der Transportriemen 2 als Zahnriemen ausgebildet sein.

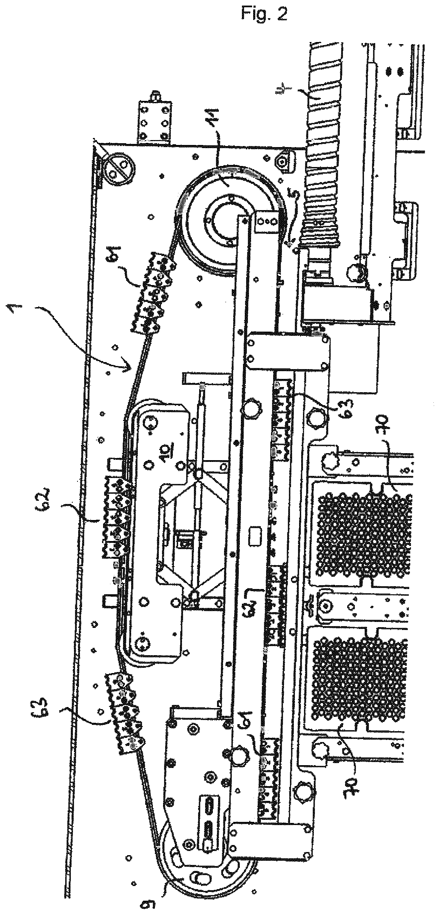

Fig. 2 zeigt die erfindungsgemäße Objekttransportvorrichtung 1 in einer Ansicht von oben. Vor der Vorrichtung 1 sind zwei Nester 70 angeordnet, in die während eines Renest-Vorgangs die zu transportierenden Objekte eingefügt werden können. Alternativ ist auch denkbar, dass die Objekte während eines Denest-Vorgangs aus den beiden Nestern 70 entnommen und der Vorrichtung 1 zugeführt werden.

Das Zuführen bzw. das Abnehmen der Objekte aus der Vorrichtung erfolgt in einem getakteten Arbeitsschritt, typischerweise mithilfe einer automatisierten Greifvorrichtung.

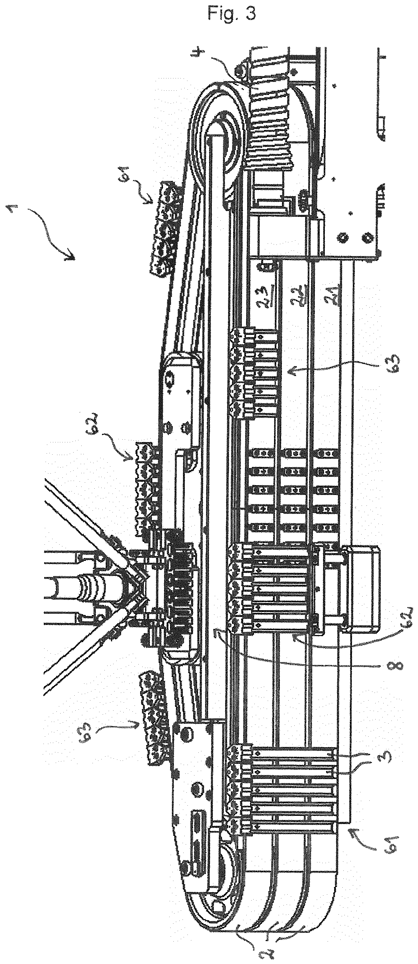

Fig. 3 zeigt eine weitere perspektivische Darstellung der erfindungsgemäßen Objekttransportvorrichtung 1, bei der zusätzlich zu den Komponenten aus Fig. 1 bzw. Fig. 2 ein Greifarm 12 dargestellt ist, der in einem Aufnahmeelement 3 geförderte Gegenstände herausnehmen oder einfügen kann.

So können beispielsweise mehrere in einem Nest 70 angeordnete Spritzen mit dem Greifelement 12 aufgenommen werden und in die Objekttransportvorrichtung 1 überführt werden. Hierzu muss das entsprechende Shuttle 61, 62, 63 nur für einen kurzen Moment stoppen oder seine Geschwindigkeit verlangsamen, sodass während des Haltens oder der Verlangsamung der mit den Spritzen bestückten Greifarm 12 diese an ein entsprechendes Shuttle (in Fig. 3 beispielsweise Shuttle 62) übergeben kann. Die anderen Shuttle 61, 63 der anderen Transportriemen 21, 23 müssen nicht synchron mit dem mittleren Transportriemen 22 anhalten, sondern können in ihrer Bewegung unabhängig dazu verfahren werden und beispielsweise ein kontinuierliches Abgeben von zu transportierenden Gegenständen über das Schneckenelement 4 vollziehen. Es liegt demnach ein zweiter Übergangsbereich 8 vor, an dem der Objekttransportvorrichtung 1 zu transportierende Gegenstände übergeben werden.

Selbstverständlich versteht der Fachmann, dass die Übergangsbereiche 5, 8 sowohl zum Hinzufügen als auch zum Abnehmen von zu transportierenden Gegenständen ausgebildet sind und nur nach gewünschter Anwendung auf eine der beiden Möglichkeiten eingestellt sind. Dabei kann vorgesehen sein, dass jeder der Transportriemen 2 mehrere Shuttle 6 aufweist. Diese sind vorzugsweise äquidistant zueinander entlang der Transportriemenlänge angeordnet. Ferner ist es von Vorteil, wenn sämtliche Shuttles 6 der mehreren Transportriemen 2 ebenfalls äquidistant zueinander entlang der übereinstimmenden Transportriemenführung angeordnet sind.

Fig. 4 zeigt eine Rückansicht der erfindungsgemäßen Objekttransportvorrichtung 1. Man erkennt auch hier die im Shuttle 61, 62, 63 zusammengefassten Aufnahmeelemente 3, die sich in Abhängigkeit von den Transportriemen 2, mit dem sie zusammenwirken, unterscheiden. So sind die Aufnahmeelemente 31, die mit dem unteren Transportriemen 21 zusammenwirken etwas länger als die Aufnahmeelemente 32, die mit dem mittleren Transportriemen 22 zusammenwirken. Diese wiederum sind ebenfalls etwas länger als die Aufnahmeelemente 33, die mit dem oberen Transportriemen 23 zusammenwirken. So wird sichergestellt, dass die zu transportierenden Gegenstände unabhängig von den Aufnahmeelementen 31, 32, 33 mit denen sie transportiert werden sich in einer gleichen Ebene befinden.

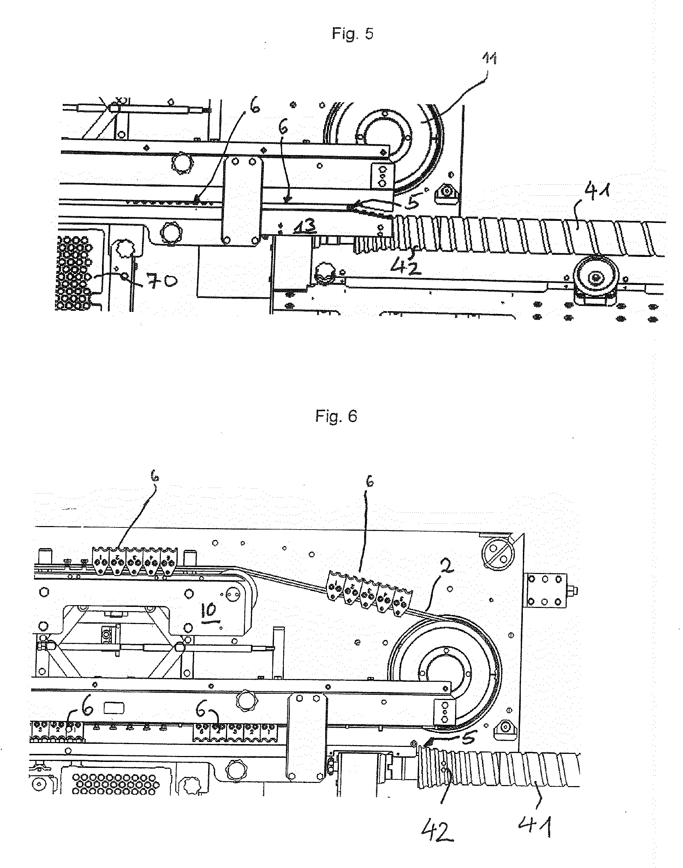

Fig. 5 zeigt eine Draufsicht eines Übergangsbereichs 8 zum Ein- oder Aufheben der zu transportierenden Gegenstände. Man erkennt die Riemenscheibe 11 und an einem Transportriemen geführte Aufnahmeelemente 3, die ein Shuttle 6 bildet. In dem Übergangsbereich 5 ragt ein Teil des trompetenförmigen Schneckenelements 4 hinein. Der in seinem Durchmesser stetig größer werdende Abschnitt 42 des Schneckenelements 4 kann einen zu transportierenden Gegenstand an ein Aufnahmeelement 3 übergeben oder den Gegenstand aus dem Aufnahmeelement 3 aufnehmen. Eine Führungsleiste 13 dient im Zusammenspiel mit den Aufnahmeelementen für ein kontrolliertes Fortbewegen der Objekte. Die Führungsleiste 13 verläuft in einem Bereich parallel zu den Transportriemen 2 und geht im Übergangsbereich dann dazu über, der Kontur des Schneckenelements 4 zu folgen. So ist ein reibungsloser Übergang zwischen den Aufnahmeelementen 3 und dem Schneckenelement 4 möglich.

Da die beiden Abschnitte 41, 42 des Schneckenelements 4 mit separaten Antrieben versehen sind, ist es zudem möglich, Lücken in der Zuführung/Abführung der zu transportierenden Gegenstände zu schließen oder zu erzeugen, indem einer der beiden Abschnitte 41, 42 der Schnecke angehalten wird, dass die Lücken geschlossen oder bei Bedarf erzeugt werden.

Fig. 6 ist eine weitere Darstellung des Übergangsbereichs 5 von oben, bei dem die Führungsleiste 13 nicht dargestellt ist.

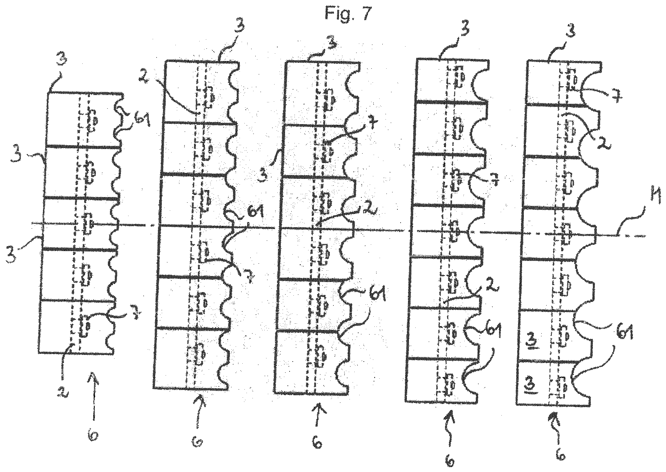

Fig. 7 zeigt mehrere Shuttle 6, die aus einer Vielzahl von Aufnahmeelementen 3 zusammengesetzt sind.

Man erkennt in strichlierter Darstellung einen Transportriemen 2 und das davon abstehende Befestigungselement 7 zum Anbringen eines Aufnahmeelements 3. Wie bereits vorstehend erläutert wird ein Shuttle 6 aus dem Aneinanderreihen mehrerer Aufnahmeelemente 3 erzeugt, die aneinander angrenzen oder zueinander benachbart sind. Mit Hilfe der vom Transportriemen abgewandten Einbuchtungen 61 kann im Zusammenspiel mit der Führungsleiste 13 (siehe Fig. 5) ein Objekt entlang eines vordefinierten Weges befördert werden. Es ist nun ein Clou der vorliegenden Erfindung, die Einbuchtungen 61 der Aufnahmeelemente in einer Teilung anzuordnen, die nur dem Format der zu transportierenden Objekte Rechnung trägt und sich nicht an dem Abstand bzw. der Teilung der an dem Transportriemen angeordneten Befestigungselemente 7 orientiert. Das Shuttle 6 hingegen besteht aus einer Vielzahl von Aufnahmeelementen, die die gleiche Teilung aufweisen wie die Befestigungselemente.

In anderen Worten wird das Shuttle 6 dabei entsprechend der Teilung von an einem Transportriemen angebrachten Befestigungselementen 7 unterteilt und zwar unabhängig davon, welches Format oder Größe eines zu transportierenden Gegenstands mit dem Shuttle 6 zu transportieren ist. Das in mehrere Teilstücke untertrennte Shuttle besitzt demnach dieselbe Teilung wie die Anordnung der mehreren Befestigungselemente 7 an einem zugehörigen Transportriemen 2. Man erkennt, dass die Aufteilung des Shuttles 6 ohne Berücksichtigung der tatsächlichen Produktteilung, also der Abstände des zu transportierenden Gegenstands in dem Shuttle 6, die anhand der Einbuchtungen 61 zu erkennen sind, vorgenommen wird.

Dadurch ist es möglich, die Mitte des Shuttles 6 immer an der gleichen Stelle zu positionieren, was einen einfacheren Betrieb bei der Verwendung von verschiedenen Formaten von zu transportierenden Objekten zulässt.

## Patentansprüche

1. Objekttransportvorrichtung (1) zur Übergabe von Gegenständen von einer Zuführeinrichtung an eine Abnahmeeinrichtung, umfassend:
mindestens zwei, vorzugsweise drei, in ihrer Breitenrichtung übereinander angeordnete Transportriemen (2), die jeweils über einen separaten Antrieb verfügen,
mehrere Aufnahmeelemente (3), von denen mindestens eines an jedem der Transportriemen (2) angeordnet ist und die dazu dienen, die zu transportierenden Gegenstände aufzunehmen, und
ein Schneckenelement (4), das dazu ausgelegt ist, mit den mehreren Aufnahmeelementen (3) zusammenzuwirken, um in einem Übergabebereich (5) einen zu transportierenden Gegenstand an eines der mehreren Aufnahmeelemente (3) zu übergeben oder aus einem der mehreren Aufnahmeelemente (3) zu übernehmen, wobei
das Schneckenelement (4) einen ersten Abschnitt (41) mit einem gleichbleibenden Durchmesser und einen zweiten Abschnitt (42) mit einem dazu größeren Durchmesser aufweist, an dem das Schneckenelement (4) mit den mehreren Aufnahmeelementen (3) zusammenwirkt,
wobei der mit den mehreren Aufnahmeelementen (3) zusammenwirkende zweite Abschnitt (42) des Schneckenelements (4) ausgehend vom Durchmesser des ersten Abschnitts (41) hin zum Übergabebereich (5) einen kontinuierlich größer werdenden Durchmesser aufweist, und
der erste Abschnitt (41) und der zweite Abschnitt (42) des Schneckenelements (4) voneinander getrennt sind und über einen jeweils separaten Antrieb verfügen.

2. Vorrichtung (1) nach Anspruch 1, wobei der mit den mehreren Aufnahmeelementen (3) zusammenwirkende zweite Abschnitt (42) des Schneckenelements (4) im Bereich seines maximalen Durchmessers dazu ausgelegt ist, mit einem der mehreren Aufnahmeelemente (3) zusammenzuwirken.

3. Vorrichtung (1) nach einem der vorhergehenden Ansprüche, wobei das Schneckenelement (4) um eine Achse rotiert, die senkrecht zur Breitenrichtung der mindestens zwei Transportriemen (2) ist.

4. Vorrichtung (1) nach einem der vorhergehenden Ansprüche, wobei die mehreren Aufnahmeelemente (3) jeweils so an den Transportriemen (2) angeordnet sind, dass sie die zu transportierenden Gegenstände in einer gemeinsamen Ebene befördern.

5. Vorrichtung (1) nach einem der vorhergehenden Ansprüche, wobei an jedem der Transportriemen (2) mehrere Aufnahmeelemente (3) in einer Gruppe (6) angeordnet sind, vorzugsweise derart, dass die mehreren Aufnahmeelemente (3) einer Gruppe in einer Längsrichtung des Transportriemens (2) aneinander angrenzen oder zueinander benachbart sind, um ein Shuttle (6) für mehrere zu transportierende Gegenstände zu bilden.

6. Vorrichtung (1) nach einem der vorhergehenden Ansprüche, wobei jeder der Transportriemen (2) über eine lösbare Verbindung mit dem mindestens einem Aufnahmeelement (3) verbunden ist, wobei vorzugsweise der Transportriemen (2) dazu ein aus seiner Riemenfläche abstehendes Befestigungselement (7) aufweist, das durch vorzugsweise eine Schwalbenschwanzverbindung mit einem Aufnahmeelement (3) durch Aufstecken oder Aufschnappen in Verbindung bringbar ist.

7. Vorrichtung (1) nach Anspruch 6, wobei
aus der Riemenfläche abstehende Befestigungselemente (7) zum Eingehen der lösbaren Verbindung vorhanden sind, die mit einer bestimmten, festen Teilung zueinander an einem entsprechenden Transportriemen (2) angeordnet sind, und
die mit den Befestigungselementen (7) in Verbindung bringbaren Aufnahmeelemente (3) zum Bilden eines Shuttles (6) für mehrere zu transportierende Gegenstände entsprechend der bestimmten, festen Teilung der Anordnung der Befestigungselemente (7) unterteilt sind.

8. Vorrichtung (1) nach Anspruch 7, wobei das aus mehreren Aufnahmeelementen (3) gebildete Shuttle (6) ohne Rücksicht auf die tatsächliche Teilung der zu fördernden Gegenstände getrennt ist, so dass vorzugweise hierdurch unabhängig von der Größe und dem Format der zu transportierenden Gegenstände die Mitte des Shuttles (6) immer an derselben Position des Transportriemens (2) liegt.

9. Vorrichtung (1) nach einem der vorhergehenden Ansprüche, wobei die mehreren Transportriemen (2) bis auf ihre in Breitenrichtung der Transportriemen (2) versetzte Anordnung im Wesentlichen gleich geführt sind und denselben Weg zurücklegen.

10. Vorrichtung (1) nach einem der vorhergehenden Ansprüche, ferner umfassend eine Riemenantriebssteuereinheit, die dazu ausgelegt ist, jeden der mehreren separaten Antriebe der Transportriemen (2) voneinander unabhängig anzusteuern, so dass die Transportriemen (2) in unterschiedlicher und nicht konstanter Geschwindigkeit antreibbar sind.

11. Vorrichtung (1) nach einem der vorhergehenden Ansprüche, ferner umfassend eine Schneckenelementantriebssteuereinheit, die dazu ausgelegt ist, jeden der mehreren separaten Antriebe der mehreren Abschnitte (41, 42) des Schneckenelements (4) voneinander unabhängig anzusteuern, um vorzugsweise freie leere Stellen in einem Produktfluss von zu transportierenden Gegenständen zu schließen und zu erzeugen..

12. Vorrichtung (1) nach einem der vorhergehenden Ansprüche, wobei mehrere Übergangsbereiche (5, 8) zum Zuführen bzw. Abnehmen der zu transportierenden Gegenstände vorhanden sind, von denen an einem Übergangsbereich (8) mehrere Gegenstände getaktet zu- oder abführbar sind und an einem anderen Übergangsbereich (8) die Gegenstände einzeln linear-kontinuierlich zu- oder abführbar sind.

13. Vorrichtung (1) nach einem der vorhergehenden Ansprüche, wobei die zu transportierenden Gegenstände pharmazeutische Container wie Spritzen, Ampullen, Zylinderampullen, Fläschchen und/oder Vials sind.

## Claims

1. An object transportation apparatus (1) for transferring articles from a supply device to a take-away device comprising:
at least two, preferably three, transportation belts (2) that are arranged above one another in their width directions and that each have a separate drive;
a plurality of reception elements (3) of which at least one is arranged at each of the transportation belts (2) and which serve to pick up the articles to be transported; and
- a screw element (4) that is configured to cooperate with the plurality of reception elements (3) to transfer an article to be transported to one of the plurality of reception elements (3) in a transfer region (5) or to take them over from one of the plurality of reception elements (3), wherein
the screw element (4) has a first section (41) having an unchanging diameter and a second section (42) having a diameter larger in comparison therewith at which the screw element (4) cooperates with the plurality of reception elements (3);
wherein the second section (42) of the screw element (4) cooperating with the plurality of reception elements (3) has a continuously increasing diameter starting from the diameter of the first section (41) toward the transfer region (5) and;
the first section (41) and the second section (42) of the screw element (4) are separate from one another and have a respective separate drive.

2. An apparatus (1) in accordance with claim 1, wherein the second section (42) of the screw element (4) cooperating with the reception elements (3) is configured in the region of its maximum diameter to cooperate with one of the plurality of reception elements (3).

3. An apparatus (1) in accordance with one of the preceding claims, wherein the screw element (4) rotates about an axis that is perpendicular to the width direction of the at least two transportation belts (2).

4. An apparatus (1) in accordance with one of the preceding claims, wherein the plurality of reception elements (3) are each arranged at the transportation belts (2) such that they convey the articles to be transported in a common plane.

5. An apparatus (1) in accordance with one of the preceding claims, wherein a plurality of reception elements (3) are arranged in a group (6) at each of the transportation belts (2), preferably such that the plurality of reception elements (3) of a group are adjacent to one another or adjoin one another in a longitudinal direction of the transportation belt (2) to form a shuttle (6) for a plurality of articles to be transported.

6. An apparatus (1) in accordance with one of the preceding claims, wherein each of the transportation belts (2) is connected to the at least one reception element (3) via a releasable connection, with the transportation belt (2) preferably having a fastening element (7) for this purpose that projects out of its belt surface and can preferably be brought into connection with a reception element (3) by a dovetail connection by plugging on or snapping on.

7. An apparatus (1) in accordance with claim 6, wherein
fastening elements (7) projecting from the belt surface are present for entering into the releasable connection and are arranged at a specific fixed division from one another at a corresponding transportation belt (2); and wherein
the reception elements (3) that can be brought into connection with the fastening elements (7) for forming a shuttle (6) for a plurality of articles to be transported are divided in accordance with the specific, fixed division of the arrangement of the fastening elements (7).

8. An apparatus (1) in accordance with claim 7, wherein the shuttle (6) formed from a plurality of reception elements (3) is separated without considering the actual division of the articles to be conveyed so that the center of the shuttle (6) preferably hereby always lies at the same position of the transportation belt (2) independently of the size and of the format of the articles to be transported.

9. An apparatus (1) in accordance with one of the preceding claims, wherein the plurality of transportation belts (2) are substantially guided the same except for their arrangement offset in the width direction of the transportation belts (2) and cover the same path.

10. An apparatus (1) in accordance with one of the preceding claims, further comprising a belt drive control unit that is configured to control each of the plurality of separate drives of the transportation belts (2) independently of one another so that the transportation belts (2) are drivable at different speeds and not at a constant speed.

11. An apparatus (1) in accordance with one of the preceding claims, further comprising a screw element drive control unit that is configured to control each of the plurality of separate drives of the plurality of sections (41, 42) of the screw element (4) independently of one another to preferably close and produce free empty positions in a product flow of articles to be transported.

12. An apparatus (1) in accordance with one of the preceding claims, wherein a plurality of transfer regions (5, 8) are present for supplying or removing the articles to be transported of which a plurality of articles can be supplied to or led away at a transfer region (8) in a clocked manner and can be individually supplied or led away in a linear continuous manner at another transfer region (8).

13. An apparatus (1) in accordance with one of the preceding claims, wherein the articles to be transported are pharmaceutical containers such as syringes, ampoules, syringe cartridges, flasks, and/or vials.

## Revendications

1. Dispositif de transport d'objets (1) destiné au transfert d'articles d'un système d'amenée à un système d'enlèvement, comprenant :
au moins deux, de préférence trois, courroies de transport (2) disposées les unes au-dessus des autres dans leur sens de la largeur, qui disposent chacune d'un entraînement séparé,
plusieurs éléments de réception (3), dont au moins un est disposé sur chacune des courroies de transport (2) et qui servent à recevoir les articles à transporter, et
un élément formant vis sans fin (4), qui est conçu pour coopérer avec les plusieurs éléments de réception (3) pour, dans une zone de transfert (5), transférer un article à transporter à un des plusieurs éléments de réception (3) ou en prendre un de l'un des plusieurs éléments de réception (3), dans lequel
l'élément formant vis sans fin (4) présente une première partie (41) avec un diamètre constant et une seconde partie (42) avec un diamètre supérieur à celui-ci, au niveau de laquelle l'élément formant vis sans fin (4) coopère avec les plusieurs éléments de réception (3),
dans lequel
la seconde partie (42) de l'élément formant vis sans fin (4) coopérant avec les plusieurs éléments de réception (3) présente un diamètre augmentant en continu à partir du diamètre de la première partie (41) jusqu'à la zone de transfert (5), et
la première partie (41) et la seconde partie (42) de l'élément formant vis sans fin (4) sont séparées l'une de l'autre et disposent d'un entraînement respectivement séparé.

2. Dispositif (1) selon la revendication 1, dans lequel la seconde partie (42) de l'élément formant vis sans fin (4) coopérant avec les plusieurs éléments de réception (3) est conçue dans la zone de son diamètre maximal pour coopérer avec l'un des plusieurs éléments de réception (3).

3. Dispositif (1) selon l'une des revendications précédentes, dans lequel l'élément formant vis sans fin (4) tourne autour d'un axe qui est perpendiculaire au sens de la largeur des au moins deux courroies de transport (2).

4. Dispositif (1) selon l'une des revendications précédentes, dans lequel les plusieurs éléments de réception (3) sont respectivement disposés sur les courroies de transport (2) de manière à acheminer les articles à transporter dans un plan commun.

5. Dispositif (1) selon l'une des revendications précédentes, dans lequel, sur chacune des courroies de transport (2), plusieurs éléments de réception (3) sont disposés en un groupe (6), de préférence de telle manière que les plusieurs éléments de réception (3) d'un groupe sont adjacents les uns aux autres ou sont voisins les uns des autres dans un sens longitudinal de la courroie de transport (2) pour former une navette (6) pour plusieurs articles à transporter.

6. Dispositif (1) selon l'une des revendications précédentes, dans lequel chacune des courroies de transport (2) est reliée à l'au moins un élément de réception (3) par le biais d'une liaison libérable, la courroie de transport (2) présentant de préférence à cet effet un élément de fixation (7) faisant saillie de sa surface de courroie, lequel peut être amené en liaison avec un élément de réception (3) par embrochement ou enclenchement, de préférence par une liaison en queue d'aronde.

7. Dispositif (1) selon la revendication 6, dans lequel
des éléments de fixation (7) faisant saillie de la surface de courroie pour établir la liaison libérable sont présents, lesquels sont disposés sur une courroie de transport (2) correspondante avec une partition fixe définie entre eux, et
les éléments de réception (3) pouvant être amenés en liaison avec les éléments de fixation (7) sont divisés de manière correspondant à la partition fixe définie de la disposition des éléments de fixation (7) pour la formation d'une navette (6) pour plusieurs articles à transporter.

8. Dispositif (1) selon la revendication 7, dans lequel la navette (6) formée de plusieurs éléments de réception (3) est séparée sans prise en compte de la partition réelle des articles à transporter, de telle sorte que le milieu de la navette (6) se trouve ainsi de préférence toujours au même emplacement sur la courroie de transport (2) indépendamment de la taille et du format des articles à transporter.

9. Dispositif (1) selon l'une des revendications précédentes, dans lequel les plusieurs courroies de transport (2) sont, à l'exception de leur disposition décalée dans le sens de la largeur des courroies de transport (2), sensiblement guidées de manière identique et parcourent le même chemin.

10. Dispositif (1) selon l'une des revendications précédentes, comprenant en outre une unité d'entraînement de courroie qui est conçue pour commander chacun des plusieurs entraînements séparés des courroies de transport (2) indépendamment les uns des autres de telle sorte que les courroies de transport (2) peuvent être entraînées à une vitesse différente et non constante.

11. Dispositif (1) selon l'une des revendications précédentes, comprenant en outre une unité d'entraînement d'élément formant vis sans fin, qui est conçue pour commander chacun des plusieurs entraînements séparés des plusieurs parties (41, 42) de l'élément formant vis sans fin (4) indépendamment les uns des autres pour, de préférence, fermer et générer des emplacements vides libres dans un flux de produits d'articles à transporter.

12. Dispositif (1) selon l'une des revendications précédentes, dans lequel plusieurs zones de transition (5, 8) pour amener ou enlever les articles à transporter sont présentes, plusieurs articles pouvant être amenés ou évacués de manière cadencée au niveau d'une zone de transition (8) de celles-ci et les articles pouvant être amenés ou évacués individuellement de manière continue linéaire au niveau d'une autre zone de transition (8) de celles-ci.

13. Dispositif (1) selon l'une des revendications précédentes, dans lequel les articles à transporter sont des contenants pharmaceutiques tels que des seringues, des ampoules, des carpules, des flacons et/ou des fioles.
